# EUROPÄISCHE PATENTANMELDUNG

(11) **EP 3 608 047 A1**
(43) Veröffentlichungstag der Anmeldung: **12.02.2020**
(21) Anmeldenummer: 19190516.5
(22) Anmeldetag: 07.08.2019
(51) Int. Cl.: B23H 9/14, B23H 3/04, B23H 5/04

(54) **VERFAHREN ZUR HERSTELLUNG VON BOHRUNGEN IN SCHWER ZU ZERSPANENDEN WERKSTOFFEN**

(30) Priorität: 09.08.2018 DE 102018213392
(71) Anmelder: MTU Aero Engines AG, 80995 München (DE)
(72) Erfinder: Platz, Albin, 86510 Ried-Baindlkirch (DE); Feiling, Nicole, 81369 München (DE); Kuepper, Anna Carina, 80809 München (DE); Huber, Norbert, 82216 Überacker (DE)

(57) **Zusammenfassung**

Die vorliegende Erfindung betrifft ein Verfahren zur Herstellung von Bohrlöchern (20) in schwer zu zerspanenden Werkstoffen, bei welchem ein Materialabtrag zur Erzeugung eines Bohrlochs durch elektrochemischen Materialabtrag mittels einer Elektrode (2) erfolgt, die in der Längsrichtung des zu erzeugenden Bohrlochs in Richtung auf den zu bearbeitenden Werkstoff mit einer Vorschubgeschwindigkeit bewegt wird, wobei die Bohrung in mindestens zwei Stufen erfolgt, wobei in der ersten Stufe die elektrochemische Bearbeitung erfolgt, bei der die Vorschubgeschwindigkeit der Elektrode (2) beim elektrochemischen Materialabtrag kleiner oder gleich 10 mm/min ist und das Bohrloch (20) mit einem Bohrlochdurchmesser gefertigt wird, welcher 0,05 bis 2 mm kleiner als der Enddurchmesser des Bohrlochs ist und wobei in einer zweiten Stufe die Weiterbearbeitung des Bohrlochs (20) auf den Enddurchmesser hin durch zerspanende Bearbeitung oder durch Erodieren oder durch eine elektrochemische Bearbeitung erfolgt, bei der die Vorschubgeschwindigkeit der Elektrode beim elektrochemischen Materialabtrag größer oder gleich 20 mm/min ist.

## Beschreibung

### HINTERGRUND DER ERFINDUNG

### GEBIET DER ERFINDUNG

Die vorliegende Erfindung betrifft ein Verfahren zur Herstellung von Bohrlöchern in schwer zu zerspanenden Werkstoffen, bei welchem ein Materialabtrag zur Erzeugung eines Bohrlochs durch elektrochemischen Materialabtrag erfolgt, sowie eine hierfür verwendete Elektrode.

### STAND DER TECHNIK

Bei der mechanischen Bearbeitung von hochtemperaturbeständigen Werkstoffen, wie sie beispielsweise als pulvermetallurgisch hergestellte Legierungen für Turbinenscheiben verwendet werden, sind die Werkzeuge extremen Belastungen ausgesetzt. Durch die hohen mechanischen und thermischen Belastungen kann es zu Werkzeugbeschädigungen und insbesondere zu Ausbrüchen an den Werkzeugen kommen, die zu Fehlern in dem zu bearbeitenden Werkstück führen können. Beispielsweise werden erforderliche Bohrungen in Turbinenscheiben heutzutage vorwiegend durch zerspanende Verfahren in die Turbinenscheiben eingebracht. Da es sich bei den Turbinenscheiben um hochfeste Schmiedelegierungen zumeist aus Nickelbasiswerkstoffen handelt, werden die Werkzeugschneiden bei der spanenden Bearbeitungsehr stark beansprucht und unterliegen einem hohen Verschleiß. Ausbrüche an Werkzeugschneiden können Schäden an den zu bearbeitenden Turbinenscheiben verursachen, die dazu führen können, dass die Scheiben nicht mehr weiterverwendet werden können und Ausschuss darstellen. Entsprechend ist ein sehr hoher Überwachungs - und Prüfaufwand erforderlich.

Darüber hinaus ist es im Bereich der Triebwerksindustrie seit mehreren Jahrzehnten bekannt, elektrochemisches Bohren zur Herstellung von Filmkühlungsbohrungen in Schaufeln von Flugtriebwerken einzusetzen. Allerdings ist bei der elektrochemischen Herstellung von Bohrungen nachteilhaft, dass die Oberflächenqualität der Wände der Bohrung nach dem elektrochemischen Bohren unter Umständen nicht den Qualitätsanforderungen genügt. Entsprechend ist das elektrochemische Bohren bisher nicht zur Herstellung von Bohrungen in Turbinenscheiben eingesetzt worden, da die dort erforderliche Formgenauigkeit und Oberflächengüte kaum oder nur schwer erreicht wird.

### OFFENBARUNG DER ERFINDUNG

### AUFGABE DER ERFINDUNG

Es ist somit Aufgabe der vorliegenden Erfindung ein Verfahren zur Herstellung von Bohrungen mit großem Verhältnis von Länge bzw. Tiefe zu Durchmesser (L/D - Verhältnis) in schwer zu zerspanenden Werkstoffen, wie beispielsweise Titan -, Nickel -, Eisen - oder Molybdänbasislegierungen und insbesondere pulvermetallurgisch hergestellten Varianten dieser Legierungen, bereitzustellen, welches effizient durchführbar ist und eine ausreichende Qualität der Bohrungsgeometrie und Oberflächengüte ermöglicht.

### TECHNISCHE LÖSUNG

Diese Aufgabe wird gelöst durch ein Verfahren mit den Merkmalen des Anspruchs 1. Außerdem ist Gegenstand der vorliegenden Erfindung eine Elektrode mit den Merkmalen des Anspruchs 13. Vorteilhafte Ausgestaltungen sind Gegenstand der abhängigen Ansprüche.

Die Erfindung schlägt zur Lösung der oben genannten Aufgabenstellung vor, ein mindestens zweistufiges Verfahren bereitzustellen, bei welchen in der ersten Stufe eine elektrochemische Bearbeitung erfolgt, um ein Bohrloch zu erzeugen. Bei der elektrochemischen Bearbeitung in der ersten Stufe wird eine Vorschubgeschwindigkeit der Elektrode, mit der die Elektrode in den Werkstoff des zu bearbeitenden Bauteils gesenkt wird, kleiner oder gleich 20 mm/min, insbesondere kleiner oder gleich 10 mm/min, vorzugsweise kleiner oder gleich 5 mm/min eingestellt und das Bohrloch wird mit einem geringfügig kleineren Durchmesser gefertigt, als der gewünschte Enddurchmesser des Bohrlochs. Hierbei bedeutet Durchmesser allgemein den Abstand zwischen zwei gegenüberliegenden Seiten des Bohrlochs, sodass nicht nur Bohrlöcher mit kreisrundem Querschnitt abgedeckt sind, sondern beliebig geformte Bohrlöcher, deren Querschnittsöffnungen kleiner ausgeführt wird, als die Querschnittsöffnung, die letztendlich erzielt werden soll. Bei der Elektrode handelt es sich um eine Formelektrode, die in ihrer Form an das zu erzeugende Bohrloch angepasst ist.

In der zweiten Stufe der Bearbeitung erfolgt eine Weiterbearbeitung des Bohrlochs, welches in der ersten Stufe gefertigt worden ist, dahingehend, dass das Bohrloch ausgeweitet wird, also auf den gewünschten Enddurchmesser der Bohrung hin bearbeitet wird. Die Bearbeitung in der zweiten Stufe kann durch zerspanende Bearbeitung oder durch Erodieren oder durch eine weitere elektrochemische Bearbeitung erfolgen, wobei jedoch bei der elektrochemischen Bearbeitung eine höhere Vorschubgeschwindigkeit der Elektrode als in der ersten Stufe eingestellt wird, nämlich größer oder gleich 20 mm/min, vorzugsweise größer oder gleich 30 mm/min und insbesondere bis zu 50 oder 60 mm/min. Durch die höhere Vorschubgeschwindigkeit der Elektrode bei der elektrochemischen Bearbeitung in der zweiten Stufe, die gleichzeitig auch die Endstufe der Bearbeitung sein kann, wird gewährleistet, dass die Oberflächengüte und die Formtreue des Bohrlochs gewährleistet bzw. verbessert wird.

Dies kann zudem dadurch erreicht werden, dass für die elektrochemische Bearbeitung in der zweiten Stufe der Bearbeitung eine Elektrode verwendet wird, die mindestens eine Seitenwand aufweist, die mit der Elektrodenlängsachse, die entlang der Vorschubrichtung der Elektrode verläuft, einen Winkel zwischen 1° und 60° einschließt, sodass sich auch ein Winkel zwischen 1° und 60° zur Seitenwand der Bohrung ergibt. Durch diese schräge Anstellung der Seitenwand der Elektrode, die für die elektrochemische Bearbeitung der Seitenwand der Bohrung verantwortlich ist, gegenüber der Seitenwand der Bohrung, wird ebenfalls eine verbesserte Oberflächenqualität, also eine glattere Oberfläche der Seitenwand der Bohrung erzielt. Dies ergibst sich dadurch, dass bei der elektrochemischen Bearbeitung eine starke Abhängigkeit der Bearbeitungsqualität vom Bearbeitungswinkel vorliegt. Entsprechend werden Flächen im Stirnspalt, also im Bereich der Stirnseite der für die elektrochemischen Bearbeitung eingesetzten Elektrode, beispielsweise beim senkrechten Bearbeiten einer Werkstoffoberfläche durch Absenken einer Elektrode in die Werkstoffoberfläche, hervorragend ausgebildet, während die Flächen im Seitenspalt, also mit einer Bearbeitungsrichtung von 90° zur Bewegungsrichtung der Elektrode, mit deutlich schlechterer Qualität hergestellt werden. Durch die schräge Ausbildung mindestens einer Seitenwand der Elektrode können auch im Seitenwandbereich vergleichbare Verhältnisse wie an der Stirnseite geschaffen werden.

Bei der elektrochemischen Bearbeitung in der zweiten Stufe kann zudem der Arbeitsspalt zwischen Elektrode und zu bearbeitendem Werkstoff bzw. Bauteil kleiner oder gleich 75 µm, insbesondere kleiner oder gleich 50 µm eingestellt werden, was ebenfalls dazu beiträgt, dass die Oberflächengüte der Seitenwand der Bohrung verbessert wird.

Zu diesem Zweck kann die Elektrode auch während der elektrochemischen Bearbeitung in der zweiten Stufe um die Elektrodenlängsachse gedreht werden.

An die zweite Stufe der Bearbeitung kann sich eine dritte Stufe der Bearbeitung anschließen, falls dies erforderlich ist, wobei in der dritten Stufe der Weiterbearbeitung des Bohrlochs auf den Enddurchmesser hin eine zerspanende Bearbeitung oder ein sonstiges Abtragungsverfahren gemäß DIN 8590, z.B. ein Erodieren, vorgenommen werden kann.

Um eine scharfe Eintrittskante und Austrittskante des Bohrlochs bezüglich der Oberflächen des Bauteils zu erzielen kann der Rand des Bohrlochs an der Ein - und / oder Austrittsseite des Bohrlochs durch ein Dichtelement mit einer der Bohrlochgröße entsprechenden Öffnung abgedichtet werden. Darüber hinaus ist es auch möglich an der Austrittsseite, an der die Elektrode bei der Fertigstellung des Bohrlochs aus dem zu bearbeitenden Bauteil wieder austritt, einen Dichtkörper vorzusehen, der ebenfalls durchbohrt wird. Dadurch wird sichergestellt, dass beim Austritt der Elektrode aus dem zu bearbeitenden Werkstoff ausreichend Elektrolyt für eine formgenaue Bearbeitung vorhanden ist, welcher durch den Dichtkörper im Bohrloch gehalten wird.

Um dies zu erreichen kann der Elektrolyt, der für die elektrochemische Bearbeitung an die Elektrode und in das Bohrloch zugeführt wird, auch bereits vor dem Austreten der Elektrode an der Austrittsseite des Bohrlochs bereitgestellt werden, um sicherzustellen, dass genügend Elektrolyt für die elektrochemische Bearbeitung insbesondere auch während des Durchbruchs vorhanden ist.

Die Zuführrichtung des Elektrolyten kann in derselben Richtung wie die Vorschubrichtung der Elektrode erfolgen und / oder entgegengesetzt dazu. Insbesondere bei der Endbearbeitung in der zweiten Stufe der Bearbeitung kann der Elektrolyt im Bohrloch auch entgegen der Vorschubrichtung der Elektrode geführt werden.

Bei dem erfindungsgemäßen Verfahren können mehrere Bohrlöcher parallel mit parallel verfahrenden Elektroden erzeugt werden, sodass eine besonders hohe Effizienz gegeben ist.

Die zerspanende Bearbeitung kann durch Fräsen, Hohnen, Läppen oder Schleifen erfolgen.

### KURZBESCHREIBUNG DER FIGUREN

Die beigefügten Zeichnungen zeigen in rein schematischer Weise in
- Figur 1: eine Schnittansicht eines elektrochemischen Bohrvorgangs gemäß einer ersten Ausführungsform,
- Figur 2: eine Schnittansicht eines elektrochemischen Bohrvorgangs vergleichbar der Figur 1 gemäß einer zweiten Ausführungsform,
- Figur 3: eine Draufsicht auf die Elektrodenspitze der in Figur 2 verwendeten Formkathode,
- Figur 4: eine Schnittansicht eines elektrochemischen Bohrvorgangs vergleichbar den Figuren 1 und 2 gemäß einer dritten Ausführungsform,
- Figur 5: eine Draufsicht auf die Elektrodenspitze der in Figur 4 verwendeten Formkathode,
- Figur 6: eine Schnittansicht eines elektrochemischen Bohrvorgangs vergleichbar den Figuren 1, 2 und 4 gemäß einer vierten Ausführungsform,
- Figur 7: eine Schnittansicht eines elektrochemischen Bohrvorgangs vergleichbar den Figuren 1, 2, 4 und 6 gemäß einer fünften Ausführungsform und in
- Figur 8: eine Schnittansicht eines elektrochemischen Bohrvorgangs vergleichbar den Figuren 1, 2, 4, 6 und 7 gemäß einer fünften Ausführungsform.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

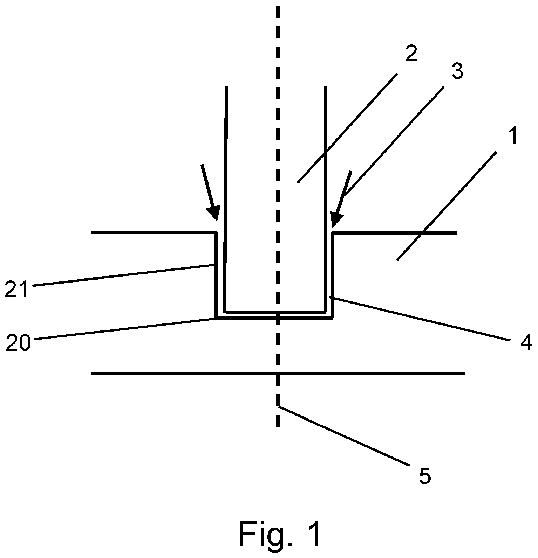

Die Figur 1 zeigt in einer rein schematischen Darstellung eine Schnittansicht durch ein zu bohrendes Bauteil 1 und eine Elektrode 2 beim Vorgang des elektrochemischen Bohrens. Die Figur 1 zeigt den Zustand, bei dem im Bauteil 1 bereits ein Teil der Bohrung eingebracht ist. Entsprechend ist die Elektrode 2 bereits teilweise in den Werkstoff des Bauteils 1 eingedrungen. Die Pfeile zeigen den Elektrolytfluss mit der Strömungsrichtung, mit dem sichergestellt wird, dass in dem Arbeitsspalt 4 zwischen der Elektrode 2 und dem Bauteil 1 ausreichend Elektrolyt für das elektrochemische Abtragen des Materials vorhanden ist. Auch eine Innenspülung ist möglich. Beim Bohren wird zwischen der Elektrode 2 bzw. Kathode 2 und dem Bauteil 1 ein elektrisches Potenzial angelegt, sodass sich das Material des Bauteils 1 entsprechend auflöst. Die Vorschubgeschwindigkeit, mit der der Bohrvorgang durchgeführt wird, ergibt sich aus dem pro Zeit zurückgelegten Weg der Elektrode 2 in Richtung der Längsrichtung 5 der Elektrode 2. Gemäß der Erfindung wird zunächst in einer ersten Stufe ein Loch mit einer niedrigen Vorschubgeschwindigkeit gebohrt, welches kleiner dimensioniert ist, als das Bohrloch, welches letztendlich in dem Bauteil vorgesehen werden soll. Entsprechend wird in einer zweiten Stufe nach dem Bohren des Bohrlochs in der ersten Stufe das Bohrloch ausgeweitet, indem mit einer entsprechend größer dimensionierten Elektrode 2 mit einer höheren Vorschubgeschwindigkeit ein zweites Loch konzentrisch zur ersten Bohrung eingebracht wird. Durch die hohe Vorschubgeschwindigkeit kann erreicht werden, dass die Seitenwände 21 der Bohrung 20 eine glatte Oberfläche aufweisen.

Alternativ kann die Einbringung des Bohrlochs bzw. die Ausweitung des Bohrlochs 20 in der zweiten Stufe durch mechanische bzw. zerspanenden Materialbearbeitung, beispielsweise durch Fräsen, Schleifen, Honen oder Läppen, oder durch Abtragen durchgeführt werden.

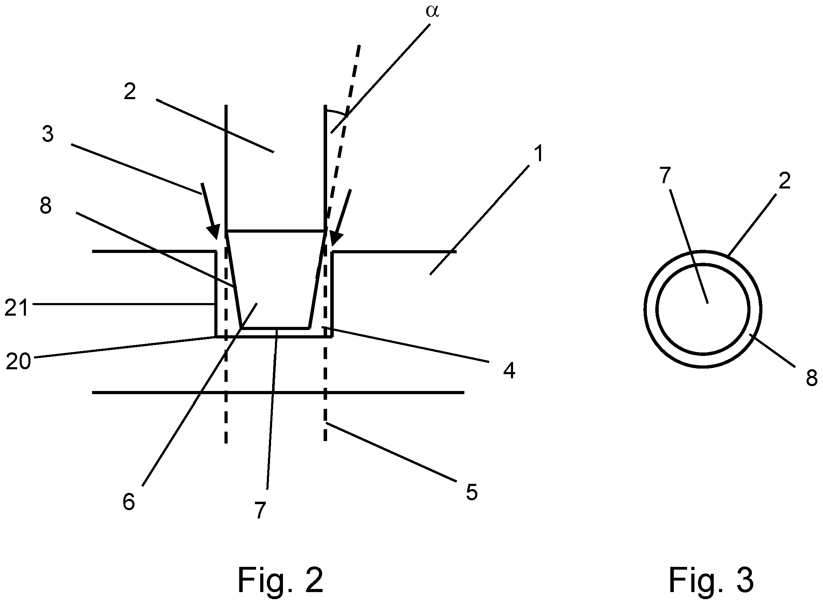

Zusätzlich kann bei der elektrochemischen Bohrung während der zweiten Stufe der Bearbeitung, also bei der Einbringung der Bohrung auf Endmaß, eine Formkathode eingesetzt werden, bei der eine oder mehrere Seitenwände 8 der Formkathode 2 unter einem Winkel α von 1° bis 60° zur Seitenwand 21 des Bohrlochs 20 bzw. zur Längsachse 5 geneigt sind. Beispiele für derartige Formkathoden 2, sind in den Figuren 2 bis 6 dargestellt.

Die Figur 2 zeigt eine Formkathode 2 in einer ähnlichen Darstellung wie in der Figur 1 beim Bohren eines Bohrlochs 20 im Bauteil 1, wobei die Formkathode 2 eine konisch auf die Stirnseite 7 der Elektrode 2 zulaufende Elektrodenspitze 6 aufweist, sodass die konische Seitenwand 8 unter einem Winkel α zur Längsachse 5 der Elektrode 2 bzw. zur Seitenwand 21 des Bohrlochs 20 geneigt ist.

Die Figur 3 zeigt die Elektrodenspitze 6 in einer Draufsicht auf die Stirnseite 7 der Elektrode 2, sodass in der Figur 3 die Stirnseite 7 der Elektrode 2 sowie die konische Seitenwand 8 der Elektrode 2 zu sehen sind.

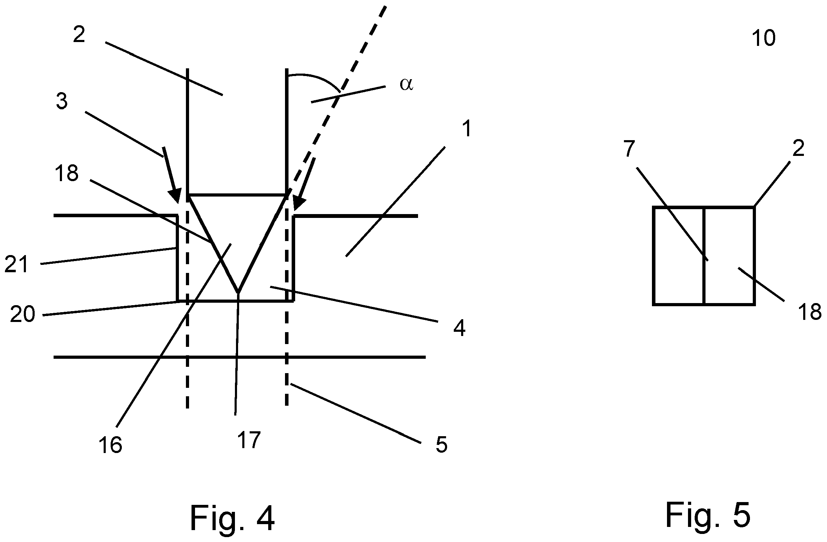

Die Figuren 4 und 5 zeigen ein weiteres Ausführungsbeispiel einer Formkathode 2, bei welcher eine satteldachartige Elektrodenspitze 16 mit zwei zur Längsachse 5 der Elektrode 2 geneigten und zur Stirnseite 17 spitz zulaufenden Seitenwänden 18 vorgesehen sind, wobei entgegen der rein schematischen Darstellung die Stirnseite 17 abgerundet sein kann. Die Elektrode 2 wird rotierend eingesetzt, wobei die Elektrode 2 um eine zentrale Drehachse parallel zur Längsachse 5 gedreht wird, sodass bei einer ausreichend hohen Drehzahl die beiden schräg geneigten Seitenwände 18 als konisch zulaufende Seitenwand wirken und die Kante an der Stirnseite 17 eine plane Fläche darstellt.

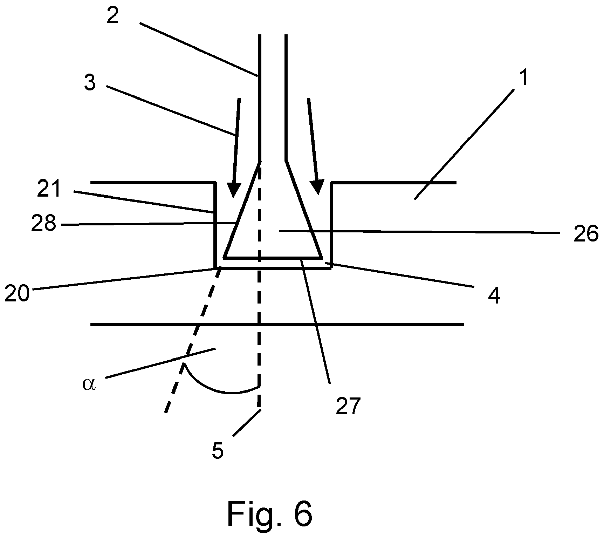

Die Figur 6 zeigt eine weitere Ausführungsform einer Formkathode 2 mit einer Elektrodenspitze 26, bei der eine plane Stirnseite 27 vorgesehen ist, die eine Form und einen Durchmesser entsprechend dem einzubringenden Bohrloch 20 aufweist, wobei sich die Elektrode 2 wegweisend von der Stirnfläche 27 verjüngt, sodass wiederum eine konisch zulaufende Seitenwand 28 ausgebildet ist, die einen Winkel azur Längsachse 5 der Elektrode 2 einschließt.

Durch die schräg zur Längsachse 5 bzw. zur Seitenwand 21 des Bohrlochs 20 verlaufenden Seitenwände 8, 18, 28 der Elektroden 2 wird ebenfalls eine Glättung der Oberfläche der Seitenwände 21 des Bohrlochs 20 bewirkt.

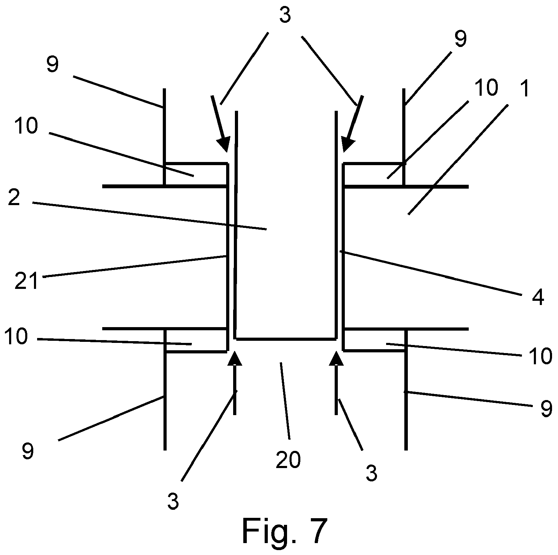

Die Figur 7 zeigt eine Schnittansicht bei einer elektrochemischen Bohrung, bei welcher das Bohrloch 20 bereits durchgehend in dem Bauteil 1 ausgebildet ist. Die Figur 7 verdeutlicht, dass während des elektrochemischen Bohrens Elemente zur Elektrolytführung 9 angeordnet sein können, die verhindern, dass Elektrolyt auf einen Bereich des Bauteils 1 gelangt, welcher nicht bearbeitet werden soll. Im Bereich des Bohrlochs 20 kann entsprechend eine Dichtung 10 vorgesehen sein, die den Rand des Bohrlochs 20 abdeckt und die Elektrolytführung 9 abdichtet.

Entsprechende Maßnahmen zur Elektrolytführung 9 und zur Abdichtung können sowohl auf der Eintrittsseite der Elektrode 2 in das Bohrloch 20 als auch an der gegenüberliegenden Seite des Bauteils an der Austrittsseite der Elektrode 2 aus dem Bauteil 1 vorgesehen sein.

Die Figur 7 zeigt im Übrigen, dass auch an der Austrittsseite eine Elektrolytzufuhr durch einen Elektrolytfluss 3 vorgesehen werden kann, sodass eine ausreichende Elektrolytbereitstellung beim Durchbruch der Elektrode 2 gewährleistet ist.

Darüber hinaus kann insbesondere bei der elektrochemischen Bearbeitung in der zweiten Stufe, also der Endbearbeitung des Bohrlochs 20, ein Elektrolytfluss 3 entgegen der Vorschubrichtung der Elektrode 2 vorgesehen werden.

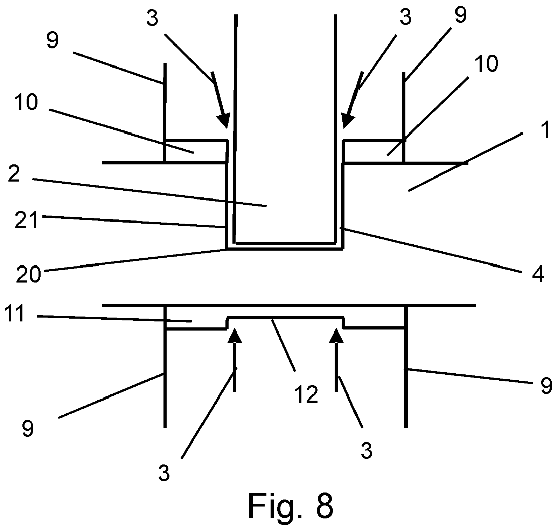

Die Figur 8 zeigt ein weiteres Ausführungsbeispiel, wobei die Elektrode 2 erst einen Teil des Bohrlochs 2 geschaffen hat und eine Restdicke des Bauteils 1 noch zu durchbohren ist. Wie bereits oben erwähnt, ist an der Durchbruchstelle ebenfalls eine Elektrolytversorgung sicherzustellen, um beim Durchbruch der Elektrode 2 ausreichend Elektrolyt im Durchbruchsbereich bereitstellen zu können. Entsprechend wird bei diesem Ausführungsbeispiel an der Austrittsseite ein Dichtungskörper 11 aus einem metallischen Material bereitgestellt, der die zu bohrende Bohröffnung komplett bis über den Rand abdeckt und eine Durchbruchsstelle 12 aufweist, die ebenfalls durchbohrt werden soll, um eine scharfe Austrittskante des Bohrlochs zu gewährleisten. Entsprechend kann bei dieser Ausgestaltung auf das vorsehen eine Elektrolytzuführung an der Austrittsseite der Elektrode 2 verzichtet werden, da durch den Dichtungskörper 11 sichergestellt ist, dass im Bohrloch 20 bis zum Schluss ausreichend Elektrolyt bereitgestellt werden kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: zu bohrendes Bauteil
- 2: Elektrode, Formkathode
- 3: Elektrolytfluss
- 4: Bearbeitungsspalt
- 5: Längsrichtung
- 6: Elektrodenspitze
- 7: Stirnseite der Elektrode
- 8: Seitenwand der Elektrode
- 9: Elektrolytführung
- 10: Dichtung
- 11: Dichtungskörper
- 12: zu durchbohrender Bereich
- 16: Elektrodenspitze
- 17: Stirnseite der Elektrode
- 18: Seitenwand der Elektrode
- 20: Bohrloch
- 21: Seitenwand des Bohrlochs
- 26: Elektrodenspitze
- 27: Stirnseite der Elektrode
- 28: Seitenwand der Elektrode

## Patentansprüche

1. Verfahren zur Herstellung von Bohrlöchern (20) in schwer zu zerspanenden Werkstoffen, bei welchem ein Materialabtrag zur Erzeugung eines Bohrlochs durch elektrochemischen Materialabtrag mittels einer Elektrode (2) erfolgt, die in der Längsrichtung des zu erzeugenden Bohrlochs in Richtung auf den zu bearbeitenden Werkstoff mit einer Vorschubgeschwindigkeit bewegt wird,
**dadurch gekennzeichnet, dass**
die Bohrung in mindestens zwei Stufen erfolgt, wobei in der ersten Stufe die elektrochemische Bearbeitung erfolgt, bei der die Vorschubgeschwindigkeit der Elektrode (2) beim elektrochemischen Materialabtrag kleiner oder gleich 20 mm/min ist und das Bohrloch (20) mit einem Bohrlochdurchmesser gefertigt wird, welcher 0,05 bis 2 mm kleiner als der Enddurchmesser des Bohrlochs ist und wobei in einer zweiten Stufe die Weiterbearbeitung des Bohrlochs (20) auf den Enddurchmesser hin durch zerspanende Bearbeitung oder durch Erodieren oder durch eine elektrochemische Bearbeitung erfolgt, bei der die Vorschubgeschwindigkeit der Elektrode beim elektrochemischen Materialabtrag größer oder gleich 20 mm/min ist.

2. Verfahren nach Anspruch 1,
**dadurch gekennzeichnet, dass**
für die elektrochemische Bearbeitung in der zweiten Stufe die Vorschubgeschwindigkeit größer oder gleich 30 mm/min, vorzugsweise bis zu 50 oder 60 mm/min ist.

3. Verfahren nach einem der vorhergehenden Ansprüche,
**dadurch gekennzeichnet, dass**
für die elektrochemische Bearbeitung in der zweiten Stufe eine Elektrode (2) verwendet wird, die mindestens eine Seitenwand (8,18,28) aufweist, die mit der Elektrodenlängsachse (5), die entlang der Vorschubrichtung der Elektrode verläuft, einen Winkel zwischen 1° und 60° einschließt.

4. Verfahren nach einem der vorhergehenden Ansprüche,
**dadurch gekennzeichnet, dass**
bei der elektrochemischen Bearbeitung in der zweiten Stufe ein Spalt (4) zwischen Elektrode (2) und zu bearbeitendem Werkstoff eingestellt wird, der kleiner oder gleich 75 µm, insbesondere kleiner oder gleich 50 µm ist.

5. Verfahren nach einem der vorhergehenden Ansprüche,
**dadurch gekennzeichnet, dass**
bei der elektrochemischen Bearbeitung in der ersten und / oder zweiten Stufe die Elektrode (2) um die Elektrodenlängsachse gedreht wird.

6. Verfahren nach einem der vorhergehenden Ansprüche,
**dadurch gekennzeichnet, dass**
nach der zweiten Stufe der Bearbeitung eine dritte Stufe der Bearbeitung erfolgt, wobei in der dritten Stufe die Weiterbearbeitung des Bohrlochs auf den Enddurchmesser hin durch zerspanende Bearbeitung oder durch Abtragen erfolgt.

7. Verfahren nach einem der vorhergehenden Ansprüche,
**dadurch gekennzeichnet, dass**
bei der elektrochemischen Bearbeitung der Rand des Bohrlochs an einer Ein - und / oder Austrittsseite des Bohrlochs für die Elektrode durch ein Dichtelement (10) mit einer der Bohrlochgröße entsprechenden Öffnung oder einem ebenfalls zu durchbohrenden metallischen Dichtkörper (11) abgedeckt wird.

8. Verfahren nach einem der vorhergehenden Ansprüche,
**dadurch gekennzeichnet, dass**
bei der elektrochemischen Bearbeitung ein zur Bearbeitung notwendiger Elektrolyt in Vorschubrichtung der Elektrode (2) zugeführt wird, insbesondere bei der elektrochemischen Bearbeitung bei der ersten Stufe der Bohrung, und / oder entgegen der Vorschubrichtung der Elektrode (2) zugeführt wird, insbesondere bei der elektrochemischen Bearbeitung bei der zweiten Stufe der Bohrung.

9. Verfahren nach einem der vorhergehenden Ansprüche,
**dadurch gekennzeichnet, dass**
bei der elektrochemischen Bearbeitung ein Elektrolyt an der Seite des zu bearbeitenden Werkstoffs, welche für die Elektrode die Austrittsseite des Bohrlochs ist, bereits vor dem Austreten der Elektrode bereitgestellt wird.

10. Verfahren nach einem der vorhergehenden Ansprüche,
**dadurch gekennzeichnet, dass**
mehrere Bohrlöcher parallel mit parallel verfahrenden Elektroden erzeugt werden.

11. Verfahren nach einem der vorhergehenden Ansprüche,
**dadurch gekennzeichnet, dass**
die zerspanende Bearbeitung durch Fräsen, Honen, Läppen oder Schleifen erfolgt.

12. Verfahren nach einem der vorhergehenden Ansprüche,
**dadurch gekennzeichnet, dass**
das Verfahren bei Bauteilen von Strömungsmaschinen, insbesondere Flugtriebwerken verwendet wird, die insbesondere aus Ti -, Fe -, Ni - oder Mo - Basislegierungen, vorzugsweise pulvermetallurgisch hergestellten Nickelbasislegierungen gebildet sind.

13. Elektrode für die elektrochemische Materialbearbeitung, insbesondere zur Durchführung des Verfahrens nach einem der vorhergehenden Ansprüche,
**dadurch gekennzeichnet, dass**
die Elektrode (2) eine Elektrodenspitze (6, 16, 26) aufweist, an der mindestens eine schräg zur Elektrodenlängsachse verlaufende, elektrochemisch aktive Seitenwand ausgebildet ist.

14. Elektrode nach Anspruch 13,
**dadurch gekennzeichnet, dass**
die schräg verlaufende Seitenwand die Seitenwand eines Kegels oder Kegelstumpfes ist.
